# EUROPEAN PATENT SPECIFICATION

(11) **EP 2 708 417 B1**
(45) Date of publication and mention of the grant of the patent: **15.01.2020**
(21) Application number: 13180364.5
(22) Date of filing: 14.08.2013
(51) Int. Cl.: B60Q 1/00, B60Q 1/115

(54) **Vehicle headlight with emission direction pivotable in vertical direction**
Fahrzeugscheinwerfer mit in vertikaler Richtung verschwenkbarer Abstrahlrichtung
Phare de véhicule à direction d'émission pivotante dans le sens vertical

(30) Priority: 13.09.2012 DE 102012021640
(43) Date of publication of application: 19.03.2014
(73) Proprietor: Valeo Vision, 93012 Bobigny Cedex (FR)
(72) Inventor: Hue, David, 95430 Butry sur Oise (FR); Fleury, Benoist, 94300 Vincennes (FR)
(74) Representative: Valeo Vision

(56) References cited:
- EP-A2- 2 399 774
- DE-A1- 19 817 594
- FR-A1- 2 945 246
- US-A1- 2007 027 582
- US-A1- 2010 164 382

## Description

The invention relates to a headlight for a motor vehicle, which has a base body as well as a support part movably disposed on the base body, which is formed for supporting a lamp device - for instance with an illuminant. By moving the support part relatively to the base body, an emission direction of the headlight can be adjusted, namely in particular in vertical direction. An acceleration sensor device measures an acceleration along at least a first sensor axis, and an electronic control unit can adjust the emission direction depending on sensor signals of the acceleration sensor device. In addition, the invention relates to a motor vehicle, in particular a passenger car, with such a headlight, as well as a method for adjusting an emission direction of a headlight.

Already in the forties of the past century, the interest in providing a system for orienting headlights in order to be able to counteract mis-adjustments of the beam of light in case of a backward or forward inclination of the vehicle was realized. The first system was composed of a manual device for orienting headlights, which the driver controlled with a knob or handle via a mechanical linkage. This allowed the driver to compensate for the vertical orientation of the headlights for compensating for loadings by vehicle occupants and/or transport items in the vehicle. Soon after, an automatic system for orienting headlights was proposed, which was connected to the vehicle suspension in order to allow correct orientation of the headlights independently of the vehicle loading without intervention of the driver. Currently, a restricted region is specified by a regulation, within which the vertical orientation of the headlights has to be maintained on different vehicle loading conditions. If the vehicle is not equipped with an adaptive suspension, which is sufficient to maintain the headlights correctly oriented independently of the loading, a system for orienting the headlights is required. The regulation prescribes still stricter glare shield measures if the vehicle has LED based headlights or if the vehicle has headlights with one or more source(s) for dim light, which generate more than 2000 lumen, which is the case in some xenon light bulbs. Such vehicles have to be equipped with automatic systems for orienting headlights, which identify the degree of inclination of the vehicle due to loading and road inclination and automatically adjust the vertical orientation of the headlights in order to maintain the beam of light correctly oriented without any intervention of the driver being required.

Such automatic orientation systems usually are based on a lever, wherein one part is mounted on the chassis and the other part on the wheel suspension. The sensors rotate according to a displacement of the chassis. A comparison between a rotation angle with a corresponding lever sensor on the rear part of the vehicle with one on the vehicle front part allows determining if the vehicle is inclined.

Therein, the invention is based on a system as it is described in the printed matter FR 2 945 246 A1, and which serves for automatic adjustment of a headlight in vertical direction. Therein, an acceleration sensor is disposed on a housing of the headlight, by means of which oscillation of the housing is detected. An inverse transfer function is applied to a predetermined frequency range of the oscillation in order to provide a compensation signal. Then, an amplitude correction and/or phase correction is applied. Depending on the corrected compensation signal, then, a linear actuator is controlled to apply vibrations to the housing of the headlight, which are opposite to the measured vibrations.

DE 198 17 594 A1 discloses a motorcycle headlight that automatically adjusts the light beam orientation.

Thus, methods are already known from the prior art, which serve for automatically adjusting or for automatic adjustment of a headlight. Generally, the orientation of the light can be adjusted depending on a current position of the motor vehicle with respect to the roadway. For example, this position of the motor vehicle can vary due to the acceleration or else due to the braking operation. In addition, the position of the motor vehicle depends on the distribution of loads. Here, it is substantially a matter of the adjustment of the emission direction of the headlight in vertical direction, i.e. pivoting of the movable support part about a pivot axis extending in vehicle transverse direction. In automatic headlight systems, the emission direction can each be adapted such that substantially always the same region in front of the motor vehicle is illuminated, namely independent of the respectively current position of the motor vehicle, thus for example independent of the current pitch angle. In this respect, the known systems are divided in two categories: there are automatic static systems serving for adjustment of the emission direction due to static variations of the pitch angle - for instance due to additional loading. Here, the adjustment of the emission direction is effected relatively slowly. On the other hand, so-called dynamic systems are also known, which are able to dynamically vary the emission direction, namely due to fast variations of the pitch angle for example due to the acceleration or else the braking or also due to road unevennesses. The present invention can be applied both in static and dynamic systems and is not restricted to a special type of systems.

In the systems known from the prior art for automatic adjustment of a headlight, the circumstance is to be considered disadvantageous that these systems are relatively complex and additionally relatively sophisticated algorithms are used to allow the correct adjustment of the headlight. Thus, in the subject matter according to document FR 2 945 246 A1, for example, sophisticated calculations have to be performed in order to always ensure the correct emission direction of the headlight relative to the vehicle chassis.

It is an object of the invention to demonstrate a solution, how in a headlight of the initially mentioned kind, the emission direction can be particularly precisely adjusted without much effort.

According to the invention, this object is solved by a headlight, by a motor vehicle as well as by a method having the features according to the respective independent claims. Advantageous implementations of the invention are the subject matter of the dependent claims, of the description and of the figures.

A headlight according to the invention for a motor vehicle includes a base body as well as a support part movably disposed on the base body, which is formed for supporting a lamp device - for example an illuminant and/or a reflector. By moving the support part relatively to the base body, an emission direction of the headlight can be adjusted. An acceleration sensor device measures an acceleration at least along a first sensor axis. An electronic control device is provided, which is configured for adjusting the emission direction depending on sensor signals of the acceleration sensor device. According to the invention, it is provided that the acceleration sensor device is disposed on the movable support part wherein the control device is configured to identify if an acceleration operation or a braking operation of the motor vehicle is currently present based on the vehicle velocity received from a communication bus, and to make plausible the acceleration measured along the first sensor axis based on this information.

Accordingly, for solving the above mentioned object, the invention takes the way to dispose the acceleration sensor device not or not only on the stationary and immovable base body (for instance housing), but on the movable support part, which can be moved relatively to the base body. Unlike the subject matter according to document FR 2 945 246 A1 - there, the acceleration sensor is attached to the immovable housing - thus, the acceleration sensor device of the headlight according to the invention moves together with the movable support part relatively to the base body. Thus, a particularly precise adjustment of the emission direction of the headlight can be achieved with relatively low effort. Based on sensor signals of the acceleration sensor device, namely, the current position of the movable support part and therefore also of the illuminant relative to the road or relative to the wheel suspension can be determined, and the position of the support part can then optionally be adapted. The arrangement of the acceleration sensor device on the movable support part according to the invention for example allows control (closed loop control) of the measured acceleration to a preset set value, thus basically also control of the current position of the support part relative to the base body depending on the measured acceleration. On the one hand, the adjustment of the emission direction is therefore particularly precise; on the other hand, this adjustment can also be effected without much effort because already present controller structures can be employed.

The light emitted by the headlight, the orientation of which is adjusted, can be a dim light and/or a high beam. This light can for example be a xenon light and/or a halogen light and/or a LED light. Therein, the invention is not restricted to a concrete type of the light or to a concrete design of the headlight.

In an embodiment, it is provided that the emission direction of the headlight can be pivoted in vertical direction by moving the support part relatively to the base body. The pivoting of the emission direction is preferably effected by pivoting the support part on the base body. Thus, the support part can be connected to the base body via a hinge, wherein the pivot axis of this hinge preferably extends in horizontal direction, for instance in vehicle transverse direction, such that the support part can be pivoted in vertical direction about the horizontal pivot axis relatively to the base body. Thus, an emission direction of the headlight can be adjusted in vertical direction, which complies with the statutory provisions (about -1 % rad with respect to the horizontal).

It proves particularly advantageous if the acceleration sensor device is disposed on the movable support part such that the first sensor axis is in an angular range of ± 5° with respect to the vertical upon longitudinal acceleration of the motor vehicle equal to zero. Therein, it is in particular provided that the first sensor axis coincides with the vertical. Then, it is ensured that in a set position of the movable support part and thus with a set emission direction of the headlight, the acceleration sensor device does not measure any acceleration along the first sensor axis (acceleration = 0, except for the gravitational acceleration). If the motor vehicle is accelerated or else braked, thus, the position of the movable support part and therefore also the orientation of the first sensor axis also varies, such that it does no longer extend vertically and the acceleration sensor device thus measures a larger acceleration. In this case, the control device can adjust the position of the support part such that the first sensor axis again coincides with the vertical and the acceleration sensor device does no longer measure any acceleration along the first sensor axis. This is a particularly low-effort approach; the control device only has to provide for the first sensor axis of the acceleration sensor device always coinciding with a reference axis, thus in particular with the vertical.

Thus, in an embodiment it is provided that the control device controls (closed-loop control) the acceleration measured along the first sensor axis to a preset value in order to adjust the emission direction. This control is effected by corresponding movement of the support part relative to the base body, thus for example by control of an actuator, by means of which the support part can be moved relatively to the base body. By the control of the measured acceleration - i.e. by the control of the orientation of the first sensor axis - it can be achieved that the emission direction of the headlight relative to the road too can always be kept constant. In particular, the control device can control the acceleration measured along the first sensor axis to zero (except for the gravitational acceleration) such that the first sensor axis coincides with the vertical.

Usually, an adjustment of the emission direction will be required if the motor vehicle is accelerated or else braked. Namely, exactly the acceleration operations as well as the braking operations cause a variation of the pitch angle of the motor vehicle. Thus, it is advantageous if the control device is also able to doubtlessly identify upon adjusting the emission direction of the headlight if an acceleration operation or else a braking operation is currently present. Thus, according to the invention, it is provided that the control device can receive the current value of a vehicle velocity from a communication bus and consider it in adjustment of the emission direction. In particular, therein, it is provided that it is identified by the control device based on the vehicle velocity if an acceleration operation or else a braking operation of the motor vehicle is currently present. Based on this information, then, the acceleration measured along the first sensor axis can be made plausible. Thus, based on the vehicle velocity, the control device can make plausible the decision if an acceleration operation or else a braking operation of the motor vehicle is currently present and thus adjustment of the headlight is required or not. This can also have influence on the movement direction of the movable support part relative to the base body and thus on the pivoting direction of the illuminant. The differentiation between acceleration operations on the one hand and braking operations on the other hand as well as the identification of braking operations and acceleration operations at all is therefore particularly reliable. The acceleration sensor device can also detect an acceleration along at least one further sensor axis different from the first sensor axis. Preferably, the acceleration sensor device can also detect an acceleration along at least one further sensor axis extending perpendicularly to the first sensor axis. Thus, the adjustment of the emission direction can be effected even more accurately and precisely. Therein, it is insignificant if only a single acceleration sensor with multiple sensor axes is used or else multiple acceleration sensors are employed, which can measure the acceleration each along one sensor axis. Therein, it proves advantageous if all of the acceleration sensors are disposed on the movable support part.

For example, the acceleration sensor device can detect an acceleration along a sensor axis, which is oriented in vehicle longitudinal direction. Thus, the control device also detects the longitudinal acceleration of the motor vehicle such that acceleration operations as well as braking operations can be particularly reliably and precisely identified. Therein, this embodiment can be implemented additionally or else alternatively to the embodiment, in which the control device receives the current vehicle velocity from the communication bus. Based on the acceleration measured in vehicle longitudinal direction, namely, the control device can identify if the motor vehicle is currently accelerated or braked or else is moved with a constant velocity, and the control device can therefore make plausible the acceleration measured along the first sensor axis and therein also determine the direction, in which the support part is to be pivoted relatively to the base body.

Additionally or alternatively, the acceleration sensor device can also detect an acceleration along a sensor axis, which is oriented in vehicle transverse direction. In this way, the calibration of the entire system can be simplified, and the inaccuracies in the position of the support part relative to the base body can be compensated for based on the measured acceleration in vehicle transverse direction.

For measuring the acceleration along the first and along the at least one further sensor axis, in one embodiment, a common sensor can be provided which is arranged on the movable support part. Such an integrated sensor can then measure the acceleration along at least two sensor axes, and in particular along three sensor axes extending orthogonal to each other. Thus, the effort in the calibration is minimal, and the measurement of acceleration can be carried out particularly accurately directly to the movable support part.

Alternatively, for measuring the acceleration along the first and along the at least one further sensor axis, however, also at least two separate sensors can be provided. Here, it can also be provided that at least one of these at least two sensors is disposed at the movable support part. The at least one further sensor can either be arranged on the movable support part or else at another location in the vehicle. This embodiment has the advantage that existing sensors of the motor vehicle can be used. In such a non-integrated sensor device, a calibration is needed in order to define reference values for the detection of the acceleration. Such a calibration can be performed for example at the end of the production line also by measuring and considering the gravitational acceleration.

Particularly preferably, an acceleration sensor device is employed, which has a range of measured values of up to 4g, in particular up to 3g, even more preferred up to 2g. Namely, such acceleration sensors with a relatively small measurement range are relatively more accurate. Thus, with an acceleration sensor with a measurement range of up to 2g, accuracy in the detection of the orientation of the sensor axis of less than 0.2° can be achieved.

Thus, the acceleration sensor device is disposed on the movable support part, to which the lamp device for example with an illuminant can also be attached. In an embodiment, it is provided that the acceleration sensor device is disposed in a relatively large distance to the lamp device and thus to the illuminant itself in order to prevent adverse affect of the measurement accuracy of the acceleration sensor device by heat of the illuminant. In particular, it can be provided that the acceleration sensor device is disposed on a side of the support part facing away from the lamp device.

Preferably, it is provided that the headlight is calibrated. This calibration can in particular be performed still in a factory, for instance at the end of a manufacturing process of the motor vehicle or else solely of the headlight. In such a calibration, the acceleration value is stored especially in the control device, which is measured in a set position of the support part - thus in particular with vertical orientation of the first sensor axis - along the first sensor axis. This acceleration is preferably zero, because an acceleration is basically not measured (except for the gravitational acceleration) with a vertical orientation of the first sensor axis. This acceleration value measured in the set position of the first sensor axis is then stored as a reference.

A motor vehicle according to the invention includes the headlight according to the invention.

A method according to the invention is configured for adjusting an emission direction of a headlight of a motor vehicle. By means of an acceleration sensor device, an acceleration along at least a first sensor axis is measured, and for adjusting the emission direction, a support part for supporting a lamp device is moved relatively to a base body of the headlight by means of an electronic control device, namely depending on sensor signals of the acceleration sensor device. A sensor device disposed on the movable support part is used as the acceleration sensor device. The control device being configured to identify if an acceleration operation or a braking operation of the motor vehicle is currently present based on the vehicle velocity received from a communication bus, and to make plausible the acceleration measured along the first sensor axis based on this information.

The preferred embodiments presented with respect to the headlight according to the invention and the advantages thereof correspondingly apply to the motor vehicle according to the invention as well as to the method according to the invention.

Further features of the invention are apparent from the claims, the figures and the description of figures. All of the features and feature combinations mentioned above in the description as well as the features and feature combinations mentioned below in the description of figures and/or shown in the figures alone are usable not only in the respectively specified combination, but also in other combinations or else alone.

Now, the invention is explained in more detail based on a preferred embodiment as well as with reference to the attached drawings. It is emphasized that the embodiment described below only represents an exemplary embodiment of the invention, and the invention therefore is not restricted to this special embodiment.

There show:
- Fig. 1 and 2: in schematic illustration a side view of a motor vehicle according to an embodiment of the invention, wherein the fundamental operation of a headlight is explained in more detail;
- Fig. 3 to 5: in schematic illustration a headlight according to an embodiment of the invention, wherein the adjustment of an emission direction of an illuminant is explained in more detail;
- Fig. 6 to 8: in schematic illustration a side view of the motor vehicle, wherein the adjustment of the emission direction of the headlight due to an acceleration of the motor vehicle is explained in more detail; and
- Fig. 9: in schematic illustration a headlight according to an embodiment of the invention.

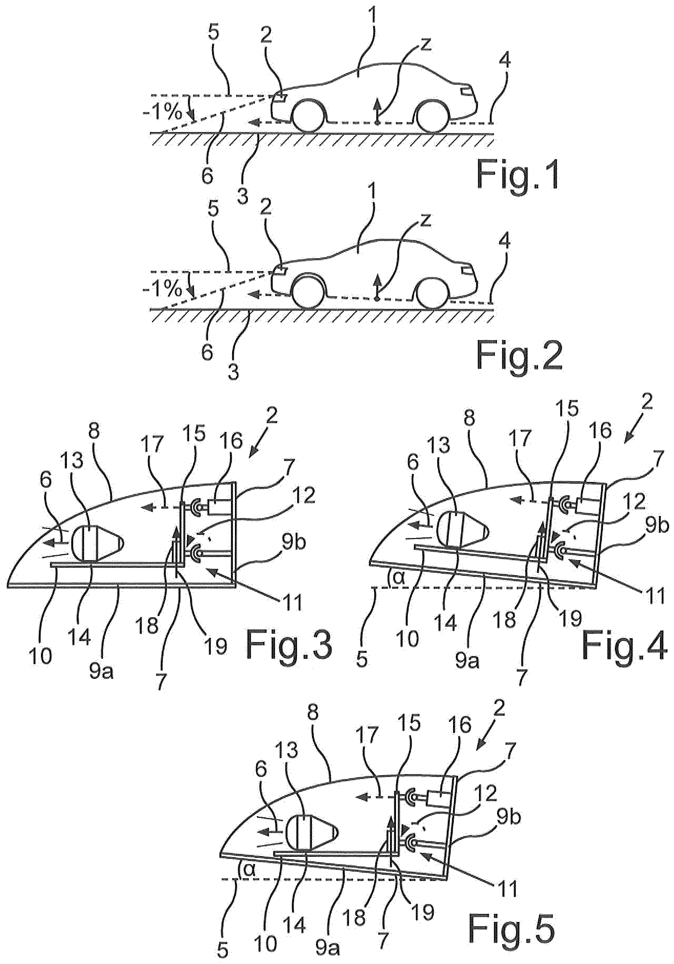

In Fig. 1 and 2, a motor vehicle 1 in the form of a passenger car according to an embodiment of the invention is schematically illustrated. In known manner, the motor vehicle 1 has two headlights 2 disposed on a front of the motor vehicle 1, namely a left as well as a right headlight. In the further description, it is no longer distinguished between the left and the right headlight 2; both headlights 2 can be identically constructed. In Fig. 1, the motor vehicle 1 moves on a road 3 with a constant velocity such that acceleration and braking do not occur. Therein, the vehicle longitudinal axis 4 is parallel to a horizontal 5 and thus also parallel to the road 3. According to the statutory provisions, an angle between the horizontal 5 and an emission direction 6 of the headlight 2 is for example -1% rad. Therein, the headlight 2 is formed such that the emission direction 6 relative to the vehicle body or to the vehicle chassis can be varied. The emission direction 6 can be pivoted relatively to the vehicle body in vertical direction. Thus, it is achieved that the emission direction 6 always forms a constant angle of -1% rad with the horizontal 5. Even with an acceleration of the motor vehicle 1, as it is illustrated in Fig. 2, the angle between the horizontal 5 on the one hand and the emission direction 6 on the other hand is -1% rad. This is allowed because the emission direction 6 can be pivoted in horizontal direction with respect to the vehicle longitudinal axis 4. Thus, in the motor vehicle 1, a constant region in front of the motor vehicle 1 is always illuminated without the oncoming traffic being glared.

In Fig. 3 to 5, a headlight 2 according to an embodiment of the invention is shown in more detail. The headlight 2 has a base body 7, which in principle represents a housing. An interior of the base body 7 is closed with the aid of a transparent pane 8. In the embodiment, the base body 7 has two plates 9a, 9b extending perpendicularly to each other and connected to each other at respective ends, wherein the plate 9a extends parallel to the vehicle longitudinal axis 4, while the plate 9b is oriented in vehicle vertical direction z. In the interior of the housing, a support part 10 is disposed, which is supported movably on the base body 7. Namely, the support part 10 is hinged to the base body 7 via a hinge 11 - for instance a ball joint - such that the support part 10 can be pivoted relatively to the base body 7 in a pivot direction 12 about a horizontal pivot axis extending perpendicularly to the drawing plane. Thus, the emission direction 6 of the headlight 2 can also be pivoted in vertical direction.

A lamp device 13 is disposed on the support part 10, which is formed for emitting a beam of light in the emission direction 6. This lamp device 13 can for example have an illuminant as well as a reflector and optionally also further optical components. Therein, the support part 10 is composed of a support plate 14, on which the lamp device 13 is disposed, as well as of an attachment plate 15, which is disposed perpendicularly to the support plate 14 and which is connected to the base body 7 via the hinge 11. On the other hand, the attachment plate 15 is also connected to an actuator 16, which is formed as a linear drive motor in the present embodiment. The actuator 16 can apply linear forces to the support part 10, namely in a direction 17 extending substantially parallel to the vehicle longitudinal axis 4. Hereby, the pivoting movement of the support part 10 about the horizontal axis can be performed according to the pivot direction 12.

Thus, the emission direction 6 is adjusted by control of the actuator 16. For this purpose, in addition, an electronic control device (not illustrated in the figures) is provided, which outputs control signals to the actuator 16 and thus adjusts the emission direction 6 such that this emission direction 6 always forms the same angle of -1% rad with the horizontal 5. In order to allow this, an acceleration sensor device 18 is disposed on the support part 10, which is formed for measuring the acceleration along a (first) sensor axis 19. This acceleration sensor device 18 is disposed on the movable support part 10 such that the sensor axis 19 coincides with the vertical and thus with the vehicle vertical direction z upon a longitudinal acceleration or the motor vehicle 1 equal to zero. The acceleration sensor device 18 is electrically coupled to the mentioned electronic control device such that the control device receives and processes sensor signals of the acceleration sensor device 18. Depending on these sensor signals, the control device then adjusts the emission direction 6 such that the emission direction forms the angle required by law with the horizontal 5.

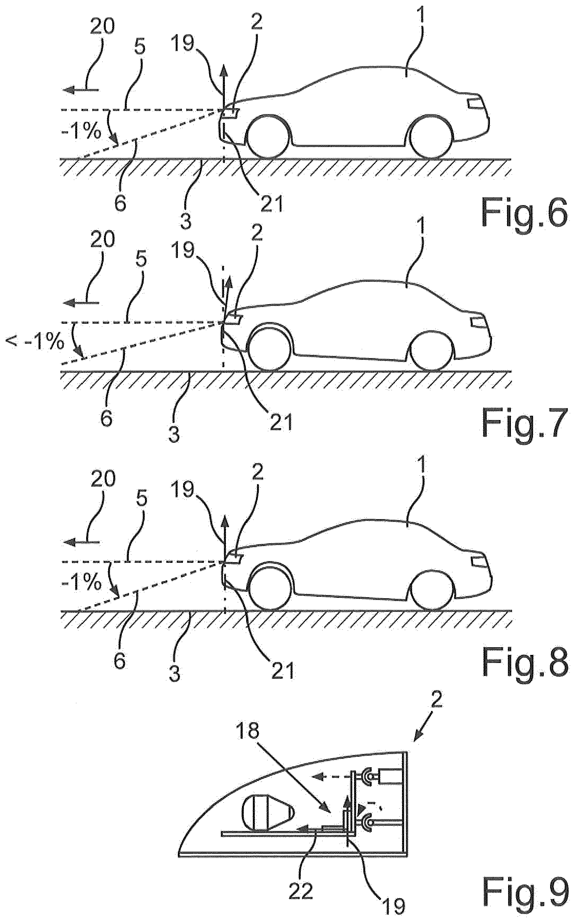

Because the sensor axis 19 is vertically oriented, in a set position of the support part 10 relative to the road 3, in which the emission direction 6 is properly adjusted, an acceleration (or only the gravitational acceleration) along the sensor axis 19 is not measured. If the longitudinal acceleration of the motor vehicle 1 is equal to zero, thus, the support part 10 is in a set position with respect to the road 3, which is represented in Fig. 3. This situation also corresponds to the case illustrated in Fig. 6, in which the motor vehicle 1 moves on the road 3 in travel direction 20 with a constant velocity. Here, the sensor axis 19 coincides with the vertical 21 such that the control device recognizes that acceleration along the sensor axis 19 is not measured. However, if the motor vehicle 1 is accelerated, thus, the position of the vehicle body with respect to the wheel suspension is altered such that the pitch angle of the motor vehicle 1 also varies. At the same time, the position of the headlight 2 relative to the horizontal 5 also varies, as it is illustrated in Fig. 4 and 7. The plate 9a of the base body 7 here extends no longer horizontally, but forms an angle α with the horizontal 5. In Fig. 4 and 7, therein, a situation is shown, in which the emission direction 6 of the headlight 2 is not yet corrected such that the angle between the horizontal 5 and the emission direction 6 is less than -1% rad. Now, the control device recognizes based on sensor signals of the acceleration sensor device 18 that an acceleration along the sensor axis 19 is measured and thus the support part 10 is no longer in the set position with respect to the horizontal 5. The control device then outputs control signals to the actuator 16, which cause the support part 10 being pivoted with respect to the base body 7 such that the prescribed angle exists between the emission direction 6 and the horizontal 5. This is effected by a control of the measured acceleration. Namely, the control device moves the support part 10 until the sensor axis 19 again coincides with the vertical 21 and thus acceleration along the sensor axis 19 is no longer measured. This situation is illustrated in Fig. 5 and 8.

In order to make plausible the identification of the acceleration operations/braking operations of the motor vehicle 1, the control device can also be connected to a communication bus of the motor vehicle 1, for instance to the CAN bus, and receive information about the current vehicle velocity. Based on this current vehicle velocity, the control device can identify whether or not the motor vehicle 1 is currently accelerated/braked. This information can then be used for making plausible the acceleration measured along the sensor axis 19.

Additionally or alternatively, the acceleration sensor device 18 can also measure an acceleration along a further sensor axis 22, which is oriented in vehicle longitudinal direction 4. Such a headlight 2' is represented in schematic illustration in Fig. 9. Here, the acceleration sensor device 18 includes two separate acceleration sensors, namely a first sensor measuring the acceleration along the sensor axis 19 as well as a second sensor measuring the acceleration along the sensor axis 22. However, it can also be provided that a single acceleration sensor is employed, by means of which the acceleration is measured in different directions. By measuring the acceleration along the further sensor axis 22, the control device can also identify with greater accuracy whether or not the motor vehicle 1 is currently accelerated/braked. This information too, can be used for making plausible the acceleration values along the sensor axis 19.

In the headlight 2, 2', the acceleration sensor device 18 can also measure an acceleration along a further sensor axis (not shown), which extends in vehicle transverse direction. Thus, the calibration of the entire system can be simplified, because by the measurement of the acceleration in vehicle transverse direction, the inaccuracies in the positioning of the movable support part 10 can be compensated for.

In the figures, the arrangement of the acceleration sensor device 18 is only exemplarily illustrated. In order to minimize the effect of heat on the operation of the acceleration sensor device 18, this acceleration sensor device 18 can also be disposed on the opposing side of the support plate 14, thus on the side facing away from the lamp device 13.

## Claims

1. Headlight (2) for a motor vehicle (1) including:
- a base body (7),
- a support part (10) movably disposed on the base body (7) for supporting a lamp device (13), wherein by moving the support part (10) relatively to the base body (7) an emission direction (6) of the headlight (2) is adjustable,
- an acceleration sensor device (18) disposed on the movable support part (10) for measuring an acceleration at least along a first sensor axis (19), and
- an electronic control device for adjusting the emission direction (6) depending on sensor signals of the acceleration sensor device (18),
**characterized in that**
the control device is configured to identify if an acceleration operation or a braking operation of the motor vehicle (1) is currently present based on the vehicle velocity received from a communication bus, and to make plausible the acceleration measured by the acceleration sensor device (18) along the first sensor axis (19) based on this information.

2. Headlight (2) according to claim 1,
**characterized in that**
by moving the support part (10) relatively to the base body (7), in particular by pivoting the support part (10) on the base body (7), the emission direction (6) of the headlight (2) is pivotable in vertical direction.

3. Headlight (2) according to claim 1 or 2,
**characterized in that**
the acceleration sensor device (18) is disposed such that upon a longitudinal acceleration of the motor vehicle (1) equal to zero, the first sensor axis (19) is in an angular range of ±5° with respect to the vertical (21), in particular coincides with the vertical (21).

4. Headlight (2) according to anyone of the preceding claims,
**characterized in that**
the control device is configured to control the acceleration measured along the first sensor axis (19) to a preset value for adjusting the emission direction (6).

5. Headlight (2) according to anyone of the preceding claims,
**characterized in that**
the acceleration sensor device (18) is configured to measure an acceleration also along at least one further sensor axis (22) different from the first sensor axis (19), in particular perpendicular to the first sensor axis (19).

6. Headlight (2) according to claim 5,
**characterized in that**
the acceleration sensor device (18) is configured to measure an acceleration along a sensor axis (22) oriented in vehicle longitudinal direction (4).

7. Headlight (2) according to claim 6,
**characterized in that**
the control device is configured to identify if an acceleration operation or a braking operation of the motor vehicle (1) is currently present based on the acceleration measured in vehicle longitudinal direction (4), and to make plausible the acceleration measured along the first sensor axis (19) based on this information.

8. Headlight (2) according to anyone of claims 5 to 7,
**characterized in that**
the acceleration sensor device (18) is configured to detect an acceleration along a sensor axis oriented in vehicle transverse direction.

9. Headlight (2) according to anyone of claims 5 to 8,
**characterized in that**
for measuring the acceleration along the first and along the at least one further sensor axis (19, 22), and in particular for measuring the acceleration along three different sensor axes, a joint sensor is provided, which is disposed on the movable support part (10).

10. Headlight (2) according to anyone of claims 5 to 8,
**characterized in that**
for measuring the acceleration along the first and along the at least one further sensor axis (19, 22), and in particular for measuring the acceleration along three different sensor axes, at least two separate sensors are provided, wherein at least one of the at least two sensors is disposed on the movable support part (10).

11. Headlight (2) according to anyone of the preceding claims,
**characterized in that**
the acceleration sensor device (18) has a range of measured values of less than 4g, in particular less than 3g, even more preferred less than 2g, along the first sensor axis (19).

12. Motor vehicle (1) including a headlight (2) according to anyone of the preceding claims

13. Method for adjusting an emission direction (6) of a headlight (2) of a motor vehicle (1), in which an acceleration along at least a first sensor axis (19) is measured by means of an acceleration sensor device (18) disposed on the movable support part (10), and for adjusting the emission direction (6) a support part (10) for supporting a lamp device (13) is moved relatively to a base body (7) of the headlight (2) by means of an electronic control device depending on sensor signals of the acceleration sensor device (18),
**characterized in that**
the control device is configured to identify if an acceleration operation or a braking operation of the motor vehicle (1) is currently present based on the vehicle velocity received from a communication bus, and to make plausible the acceleration measured by the acceleration sensor device (18) along the first sensor axis (19) based on this information.

## Patentansprüche

1. Scheinwerfer (2) für ein Kraftfahrzeug (1) mit:
- einen Grundkörper (7),
- ein Trägerteil (10), das beweglich auf dem Grundkörper (7) zum Tragen einer Lampenvorrichtung (13) angeordnet ist, wobei durch Bewegen des Trägerteils (10) relativ zum Grundkörper (7) eine Emissionsrichtung (6) des Scheinwerfers (2) einstellbar ist,
- eine Beschleunigungssensorvorrichtung (18), die auf dem beweglichen Trägerteil (10) angeordnet ist, um eine Beschleunigung zumindest entlang einer ersten Sensorachse (19) zu messen, und
- eine elektronische Steuervorrichtung zum Einstellen der Emissionsrichtung (6) in Abhängigkeit von Sensorsignalen der Beschleunigungssensorvorrichtung (18), **dadurch gekennzeichnet, dass**
die Steuervorrichtung konfiguriert ist, um zu identifizieren, ob ein Beschleunigungsvorgang oder ein Bremsvorgang des Kraftfahrzeugs (1) basierend auf der von einem Kommunikationsbus empfangenen Fahrzeuggeschwindigkeit vorliegt, und um die von der Beschleunigungssensorvorrichtung (18) gemessene Beschleunigung entlang der ersten Sensorachse (19) basierend auf diesen Informationen plausibel zu machen.

2. Scheinwerfer (2) nach Anspruch 1,
**dadurch gekennzeichnet, dass**
durch Bewegen des Trägerteils (10) relativ zum Grundkörper (7), insbesondere durch Schwenken des Trägerteils (10) am Grundkörper (7), die Abstrahlrichtung (6) des Scheinwerfers (2) in vertikaler Richtung schwenkbar ist.

3. Scheinwerfer (2) nach Anspruch 1 oder 2,**dadurch**
**gekennzeichnet, dass**
die Beschleunigungssensorvorrichtung (18) so angeordnet ist, dass bei einer Längsbeschleunigung des Kraftfahrzeugs (1) gleich Null die erste Sensorachse (19) in einem Winkelbereich von ±5° zur Vertikalen (21) liegt, insbesondere mit der Vertikalen (21) zusammenfällt.

4. Scheinwerfer (2) nach einem der vorstehenden Ansprüche,**dadurch**
**gekennzeichnet, dass**
die Steuervorrichtung konfiguriert ist, um die entlang der ersten Sensorachse (19) gemessene Beschleunigung auf einen voreingestellten Wert zum Einstellen der Emissionsrichtung (6) zu steuern.

5. Scheinwerfer (2) nach einem der vorstehenden Ansprüche,**dadurch**
**gekennzeichnet, dass**
die Beschleunigungssensorvorrichtung (18) konfiguriert ist, um eine Beschleunigung auch entlang mindestens einer weiteren Sensorachse (22) zu messen, die sich von der ersten Sensorachse (19) unterscheidet, insbesondere senkrecht zur ersten Sensorachse (19).

6. Scheinwerfer (2) nach Anspruch 5,
**dadurch gekennzeichnet, dass**
die Beschleunigungssensorvorrichtung (18) konfiguriert ist, um eine Beschleunigung entlang einer in Fahrzeuglängsrichtung (4) ausgerichteten Sensorachse (22) zu messen.

7. Scheinwerfer (2) nach Anspruch 6,**dadurch**
**gekennzeichnet, dass**
die Steuervorrichtung konfiguriert ist, um zu identifizieren, ob ein Beschleunigungsvorgang oder ein Bremsvorgang des Kraftfahrzeugs (1) basierend auf der in Fahrzeuglängsrichtung (4) gemessenen Beschleunigung vorhanden ist, und um die entlang der ersten Sensorachse (19) gemessene Beschleunigung basierend auf diesen Informationen plausibel zu machen.

8. Scheinwerfer (2) nach einem der Ansprüche 5 bis 7,**dadurch**
**gekennzeichnet, dass**
die Beschleunigungssensorvorrichtung (18) konfiguriert ist, um eine Beschleunigung entlang einer Sensorachse zu erfassen, die in Fahrzeugquerrichtung ausgerichtet ist.

9. Scheinwerfer (2) nach einem der Ansprüche 5 bis 8,**dadurch**
**gekennzeichnet, dass**
zum Messen der Beschleunigung entlang der ersten und entlang der mindestens einen weiteren Sensorachse (19, 22), und insbesondere zum Messen der Beschleunigung entlang drei verschiedener Sensorachsen, ist ein Gelenksensor vorgesehen, der am beweglichen Trägerteil (10) angeordnet ist.

10. Scheinwerfer (2) nach einem der Ansprüche 5 bis 8,**dadurch**
**gekennzeichnet, dass**
zum Messen der Beschleunigung entlang der ersten und entlang der mindestens einen weiteren Sensorachse (19, 22), und insbesondere zum Messen der Beschleunigung entlang drei verschiedener Sensorachsen, sind mindestens zwei separate Sensoren vorgesehen, wobei mindestens einer der mindestens zwei Sensoren am beweglichen Trägerteil (10) angeordnet ist.

11. Scheinwerfer (2) nach einem der vorstehenden Ansprüche,**dadurch**
**gekennzeichnet, dass**
die Beschleunigungssensorvorrichtung (18) einen Messwertbereich von weniger als 4g, insbesondere weniger als 3g, noch bevorzugter weniger als 2g, entlang der ersten Sensorachse (19) aufweist.

12. Kraftfahrzeug (1) mit einem Scheinwerfer (2) nach einem der vorstehenden Ansprüche.

13. Verfahren zum Einstellen einer Emissionsrichtung (6) eines Scheinwerfers (2) eines Kraftfahrzeugs (1), bei dem eine Beschleunigung entlang mindestens einer ersten Sensorachse (19) mittels einer am beweglichen Trägerteil (10) angeordneten Beschleunigungssensorvorrichtung (18) gemessen wird und zum Einstellen der Emissionsrichtung (6) ein Trägerteil (10) zum Tragen einer Lampenvorrichtung (13) mittels einer elektronischen Steuereinrichtung in Abhängigkeit von Sensorsignalen der Beschleunigungssensorvorrichtung (18) relativ zu einem Grundkörper (7) des Scheinwerfers (2) bewegt wird,
**dadurch gekennzeichnet, dass**
die Steuervorrichtung konfiguriert ist, um zu identifizieren, ob ein Beschleunigungsvorgang oder ein Bremsvorgang des Kraftfahrzeugs (1) basierend auf der von einem Kommunikationsbus empfangenen Fahrzeuggeschwindigkeit vorliegt, und um die von der Beschleunigungssensorvorrichtung (18) gemessene Beschleunigung entlang der ersten Sensorachse (19) basierend auf diesen Informationen plausibel zu machen.

## Revendications

1. Projecteur (2) pour véhicule automobile (1) comprenant :
- un corps de base (7),
- une partie support (10) disposée de manière mobile sur le corps de base (7) pour supporter un dispositif de lampe (13), dans lequel, en déplaçant la partie support (10) par rapport au corps de base (7), une direction d'émission (6) du phare (2) est réglable,
- un dispositif capteur d'accélération (18) disposé sur la partie support mobile (10) pour mesurer une accélération au moins le long d'un premier axe capteur (19), et
- un dispositif de commande électronique pour régler la direction d'émission (6) en fonction des signaux de capteur du dispositif capteur d'accélération (18),
**caractérisé en ce que**
le dispositif de commande est configuré pour identifier si une opération d'accélération ou une opération de freinage du véhicule automobile (1) est actuellement présente sur la base de la vitesse du véhicule reçue d'un bus de communication, et pour rendre plausible l'accélération mesurée par le dispositif capteur d'accélération (18) le long du premier axe capteur (19) en fonction de cette information.

2. Projecteur (2) selon la revendication 1,
**caractérisé en ce que**
en déplaçant la partie support (10) par rapport au corps de base (7), en particulier en faisant pivoter la partie support (10) sur le corps de base (7), la direction d'émission (6) du projecteur (2) peut pivoter en direction verticale.

3. Projecteur (2) selon la revendication 1 ou 2,
**caractérisé en ce que**
le dispositif capteur d'accélération (18) est disposé de telle sorte que, lors d'une accélération longitudinale du véhicule automobile (1) égale à zéro, le premier axe capteur (19) se trouve dans une plage angulaire de ±5° par rapport à la verticale (21), en particulier coïncide avec la verticale (21).

4. Projecteur (2) selon l'une quelconque des revendications précédentes,
**caractérisé en ce que**
le dispositif de commande est configuré pour commander l'accélération mesurée le long du premier axe de capteur (19) à une valeur préréglée pour régler la direction d'émission (6).

5. Projecteur (2) selon l'une quelconque des revendications précédentes,
**caractérisé en ce que**
le dispositif de capteur d'accélération (18) est configuré pour mesurer une accélération également le long d'au moins un autre axe de capteur (22) différent du premier axe de capteur (19), en particulier perpendiculaire au premier axe de capteur (19).

6. Projecteur (2) selon la revendication 5,
**caractérisé en ce que**
le dispositif de capteur d'accélération (18) est configuré pour mesurer une accélération le long d'un axe de capteur (22) orienté dans la direction longitudinale du véhicule (4).

7. Projecteur (2) selon la revendication 6,
**caractérisé en ce que**
le dispositif de commande est configuré pour identifier si une opération d'accélération ou une opération de freinage du véhicule à moteur (1) est actuellement présente sur la base de l'accélération mesurée dans la direction longitudinale du véhicule (4), et pour rendre plausible l'accélération mesurée le long du premier axe capteur (19) sur la base de cette information.

8. Projecteur (2) selon l'une quelconque des revendications 5 à 7,
**caractérisé en ce que**
le dispositif capteur d'accélération (18) est configuré pour détecter une accélération le long d'un axe capteur orienté dans la direction transversale du véhicule.

9. Projecteur (2) selon l'une quelconque des revendications 5 à 8,
**caractérisé en ce que**
pour mesurer l'accélération le long du premier axe et le long d'au moins un autre axe de capteur (19, 22), et en particulier pour mesurer l'accélération le long de trois axes de capteur différents, un capteur commun est prévu, qui est disposé sur la partie support mobile (10).

10. Projecteur (2) selon l'une quelconque des revendications 5 à 8,
**caractérisé en ce que**
pour mesurer l'accélération le long du premier et le long d'au moins un autre axe de capteur (19, 22), et en particulier pour mesurer l'accélération le long de trois axes de capteur différents, il est prévu au moins deux capteurs séparés, au moins l'un des au moins deux capteurs étant disposé sur la partie support (10) mobile.

11. Projecteur (2) selon l'une quelconque des revendications précédentes,
**caractérisé en ce que**
le dispositif capteur d'accélération (18) a une plage de valeurs mesurées inférieure à 4g, en particulier inférieure à 3g, encore plus préférée inférieure à 2g, le long du premier axe capteur (19).

12. Véhicule automobile (1) comprenant un phare (2) selon l'une quelconque des revendications précédentes.

13. Procédé de réglage d'une direction d'émission (6) d'un phare (2) d'un véhicule automobile (1), dans lequel une accélération le long d'au moins un premier axe de capteur (19) est mesurée au moyen d'un dispositif capteur d'accélération (18) disposé sur la partie support mobile (10), et une partie support (10) pour supporter un dispositif lampe (13) est déplacé relativement à un corps de base (7) du phare (2) par un dispositif de commande électronique selon les signaux capteurs du dispositif capteur d'accélération (18) pour régler la direction d'émission (6),
**caractérisé en ce que**
le dispositif de commande est configuré pour identifier si une opération d'accélération ou une opération de freinage du véhicule automobile (1) est actuellement présente sur la base de la vitesse du véhicule reçue d'un bus de communication, et pour rendre plausible l'accélération mesurée par le dispositif capteur d'accélération (18) le long du premier axe capteur (19) en fonction de cette information.
